# EUROPÄISCHE PATENTSCHRIFT

(11) **EP 0 553 793 B1**
(45) Veröffentlichungstag und Bekanntmachung des Hinweises auf die Patenterteilung: **15.05.1996**
(21) Anmeldenummer: 93101218.1
(22) Anmeldetag: 27.01.1993
(51) Int. Cl.: B03B 5/32

(54) **Vorrichtung und Verfahren zur nassmechanischen Aufbereitung von Feststoffen**
Apparatus and method for the wet-mechanical treatment of solids
Appareil et procédé pour le traitement mécanique humide de solides

(30) Priorität: 31.01.1992 DE 4202778; 13.03.1992 DE 4208104
(43) Veröffentlichungstag der Anmeldung: 04.08.1993
(73) Patentinhaber: Klöckner-Humboldt-Deutz Aktiengesellschaft, D-51149 Köln (DE)
(72) Erfinder: Unkelbach, Karl-Heinz, Dr., W-5000 Köln 50 (DE); Arhelger, Gunther, W-5064 Rösrath (DE); Büttner, Rolf, W-5000 Köln 21 (DE)

(56) Entgegenhaltungen:
- EP-A- 0 180 437
- DE-A- 2 612 696
- DE-A- 3 134 935
- GB-A- 2 064 997
- US-A- 2 528 974
- US-A- 4 746 422
- DATABASE WPI Section Ch, Week 7809, Derwent Publications Ltd., London, GB; Class A35, AN 78-17037A Ä09Ü

## Beschreibung

Die Erfindung bezieht sich auf eine Vorrichtung und Verfahren zur naßmechanischen Trennung von Feststoffen insbesondere von Kunststoffen nach ihrer Dichte in einer Trennflüssigkeit im Zentrifugalfeld mit einem rotierenden Behälter, der mit Öffnungen für den Eintrag der zu trennenden Feststoffe und für den Austrag der getrennten Feststoffe und der Trennflüssigkeit versehen ist, und mit einer im Behälter angeordneten rotierenden Austragsvorrichtung, vorzugsweise einer rotierenden Transportschnecke.

Die naßmechanische Trennung von Feststoffen nach ihrer Dichte in einem Zentrifugalfeld eines rotierenden Behälters ist aus der US-PS 2,528,974 bekannt. Bei diesem bekannten Verfahren werden Erze nach ihrer Dichte in einer als Zentrifuge ausgebildeten Vorrichtung getrennt, wobei durch Variation der Trennflüssigkeitsdichte das Erz in mehrere Dichtestufen zwischen den Endwerten von kleiner 4,0 g/cm³ bis größer 7,2 g/cm³ getrennt wird. Die hierzu verwendete Zentrifuge besitzt als Austragsvorrichtung zwei auf einer Welle angeordnete gegenläufig gewendelte Transportschnecken, die das Schwimmgut zu einer Seite und das Sinkgut zur anderen Seite der Zentrifuge fördern. Die Austrittsöffnung für die Trennflüssigkeit befindet sich neben der Austrittsöffnung für das Schwimmgut gleichfalls an einem Ende der Zentrifuge.

Nachteilig bei dieser durch die US-PS 2,528,974 bekannten Trennvorrichtung ist die aufwendige Konstruktion der Austragsvorrichtung, die durch die gleichzeitige gegenläufige Wendelung der Transportschnecken zu unerwünschten erwünschten Turbulenzen in der Trennflüssigkeit führt sowie der Fehlaustrag an Schwimmgut am Sinkgutaustrag, bedingt durch die örtliche Nähe der Aufgabeöffnung für die Erzsuspension zur Austrittsöffnung für das Sinkgut.

Aus DE-A-31 34 935 ist eine sogenannte Dreiphasen-Dekantierzentrifuge bekannt, in Gestalt einer Schneckenzentrifuge, die eine Suspension, z. B. eine Olivenölpulpe, in zwei Flüssigkeitsphasen unterschiedlichen spezifischen Gewichtes, nämlich in Olivenöl einerseits und Wasser andererseits, und in die Feststoffanteile, die als Sinkgut anfallen, zerlegen kann. Ein als Feststoff anfallendes Schwimmgut ist nicht vorhanden. Insofern weist der bekannte Dreiphasen-Dekanter auch nur einen einzigen Feststoffaustrag auf, und die in der Zentrifugentrommel rotierende Förderschnecke fördert nur in eine einzige Richtung zum Austrag des Sinkguts. Der bekannte Dreiphasen-Dekanter ist nicht geeignet, aus einer Suspension Feststoffe unterschiedlicher Dichte wie z. B. Kunststofffraktionen unterschiedlicher Dichte aus einem Kunststoffgemisch abzutrennen bzw. ein solches Feststoffgemisch mit hoher Trennschärfe in spezifisch leichtere und spezifisch schwerere Komponenten zu sortieren.

Der Erfindung liegt die Aufgab zugrunde, eine Vorrichtung und ein Verfahren zur naßmechanischen Trennung von Feststoffgemischen nach der Dichte in einem Zentrifugalfeld bei hoher Trennschärfe zu schaffen, anwendbar z. B. zur sortenreinen Sortierung von Altkunststoffgemischen, von Elektronikschrott etc..

Diese Aufgabe wird vorrichtungsmäßig mit den Maßnahmen des Anspruchs 1 und verfahrensmäßig mit den Maßnahmen des Anspruchs 4 gelöst. Vorteilhafte Ausgestaltungen sind in den Unteransprüchen angegeben.

Durch die erfindungsmäßige Ausgestaltung der Austragsvorrichtung mit einer Stauscheibe, die den Bereich des Sinkgutaustrags vom Bereich des Schwimmgutaustrags räumlich trennt und mit der Maßnahme, die Stauscheibe zwischen der Aufgabeöffnung und der Austragsöffnung für das Sinkgut anzuordnen, wird eine vollständige Trennung des Schwimmgutes vom Sinkgut erreicht. Durch die erfindungsgemäße Anordnung der Austragsöffnung für die Trennflüssigkeit in den Austragshereich für das Sinkgut wird weiterhin erfolgreich verhindert, daß das Schwimmgut mit der Trennflüssigkeit gemeinsam ausgetragen werden kann. Durch die unterschiedliche aber separate Wendejung der Austragsvorrichtung innerhalb der durch die Stauscheibe getrennten Bereiche wird ein Transport der getrennten Feststoffe weitgehend turbulenzfrei zu den Austragsöffnungen hin ermöglicht.

In weiterer Ausgestaltung der Erfindung ist es auch möglich, die beiden Wandeln der Austragsvorrichtung auch mit unterschiedlicher Rotationsdrehzahl anzutreiben, um auch bei unterschiedlichen Masseverhältnissen von Sinkgut zu Schwimmgut die Trennung optimal ohne Verluste an Durchsatz und Trennschärfe durchführen zu können.

Durch eine weitere vorteilhafte Ausgestaltung der Erfindung ist es auch möglich, die voneinander getrennten Feststoffe vor ihrem Austrag aus der Trennvorrichtung durch eine Waschung mit einer geeigneten Flüssigkeit von der anhaftenden Trennflüssigkeit zu reinigen. Zu diesem Zweck ist die Austragsvorrichtung mit Einlaßöffnungen für die Einleitung einer Waschflüssigkeit versehen und die äußere Mantelfläche des rotierenden Behälters der Trennvorrichtung unmittelbar vor den Feststoffaustragsöffnungen als Sieb ausgebildet, durch dessen Öffnungen die von der Waschflüssigkeit verdrängte Trennflüssigkeit hindurchtreten kann. Die ausgewaschene Trennflüssigkeit, die mit der Waschflüssigkeit verdünnt ist, wird dann über entsprechend angeordnete Austräge getrennt von der übrigen Trennflüssigkeit ausgetragen.

Beim Betrieb der Trennvorrichtung üben hohe Zentrifugalbeschleunigungen, die mehr als 300 x g vorzugsweise mehr als 800 x g betragen, extreme Kräfte auf die Feststoffteilchen aus, wobei die Kräfte je nach Dichte der Feststoffteilchen radial nach innen oder nach außen wirken. Auf diese Weise werden nicht nur die Feststoffe voneinander getrennt, sondern es wird auch feinstkörniger Schmutz, der eventuell an den Oberflächen der Feststoffteilchen haftet, von diesen abgerissen. Auch die Trennflüssigkeit wird weitgehend von Schwebeteilchen befreit, so daß bei der Rückführung der Trennflüssigkeit stets saubere Trennflüssigkeit vorhanden ist und keine unerwünschten Kreisläufe von feinsten Schwebeteilchen, die die Dichte der Trennflüssigkeit verändern, entstehen können. Hierdurch ergeben sich Reinheiten der getrennten Produkte, die bisher mit mechanischen Methoden nicht erzielt werden konnten.

In weiterer Ausgestaltung der Erfindung ist es auch möglich, insbesondere bei der Trennung von Kunststoffen, deren Dichteunterschiede sehr gering sind, das Trennverfahren bei einer Temperatur oberhalb des Schmelzpunktes eines der Kunststoffe durchzuführen, so daß die gebildete Schmelze als Trennflüssigkeit wirkt. Der geschmolzene Kunststoff wird dann in besonders reiner Form ausgetragen, während die übrigen Kunststoffe je nach ihrer Dichte als Sink- oder Schwimmgut ausgetragen werden. Da die gebildeten Schmelzen oft von hoher Viskosität sind, ist auch in diesen Fällen die erfindungsmäßige Einwirkung hoher Zentrifugalkräfte von Vorteil.

Beispielhafte Vorrichtungen gemäß der Erfindung werden anhand schematischer Zeichnungsfiguren näher erläutert.

Es zeigt:
- Fig. 1:: einen schematischen Längsschnitt durch eine als Schneckenzentrifuge ausgebildete Trennvorrichtung;
- Fig. 2:: einen schematischen Längsschnitt durch eine als Schneckensiebzentrifuge ausgebildete Trennvorrichtung.

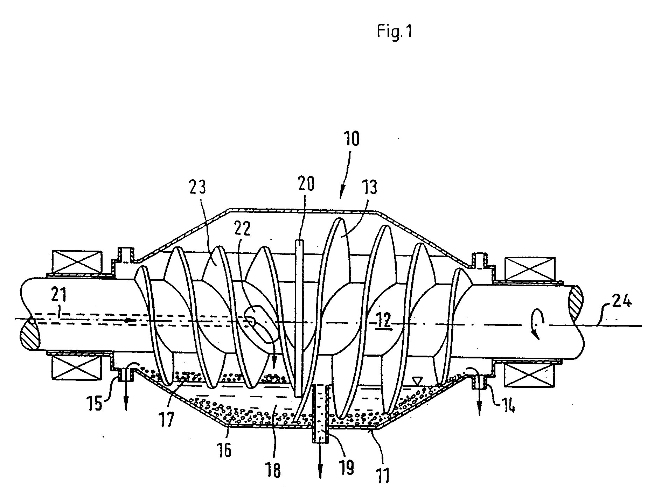

Gemäß Fig. 1 besteht die Trennvorrichtung (10) aus einem zylindrischen an beiden Enden konischen Behälter (11). Innerhalb des Behälters (11) befindet sich eine zweiteilige Transportschnecke (12) mit Schneckenwendeln (13) zum Austrag des Sinkgutes (16) und mit Schneckenwendeln (23) zum Austrag des Schwimmgutes (17). Durch unterschiedliche Gestaltung der Schneckenwendel (äußerer Durchmesser und gegenläufige Wendeln) werden das Sinkgut (16) und das Schwimmgut (17) zu entgegengesetzt angeordneten Austragsöffnungen (14, 15) transportiert: das Sinkgut (16) zu einer oder mehreren Austragsöffnungen (14), das Schwimmgut (17) zu einer oder mehreren Austragsöffnungen (15). Die vom Sinkgut und vom Schwimmgut abgetrennte Trennflüssigkeit (18) wird über eine oder mehrere Düsen (19) in der Mitte der Trennvorrichtung ausgetragen. Eine Stauscheibe (20) verhindert, daß während des Trennvorgangs das Schwimmgut (17) von den Wendeln (13) für das Sinkgut (16) mit erfaßt werden kann.

Im Betrieb der Trennvorrichtung (10) wird die aus den zu trennenden Feststoffen (16, 17) und der Trennflüssigkeit (18) gebildete Suspension über ein axial angeordnetes Aufgaberohr (21) durch eine oder mehrere im Schneckenmantel angeordnete Öffnungen (22) in den Behälterinnenraum aufgegeben. Durch Rotation des Behälters (11) und der Transportschnecke (12), wobei die Transportschnecke mit einer von der Behälterdrehzahl abweichenden Drehzahl angetrieben wird, wird die Suspension in Rotation versetzt und in der Suspension ein Zentrifugalfeld erzeugt. Infolge des Dichteunterschieds der Feststoffe und der Trennflüssigkeit sowie der wirkenden Zentrifugalkraft findet in sehr kurzer Zeit eine Trennung des Feststoffs statt, wobei der leichte Feststoff [Schwimmgut (17)] sich auf der Trennflüssigkeit (18) anordnet und der schwere Feststoff [Sinkgut (16)] zur äußeren Mantelfläche des Behälters (11) absinkt. Das Schwimmgut (17) wird nun von der Schneckenwendel (23) erfaßt und zur Austragsöffnung (15) gefördert, das Sinkgut (16) wird durch die Schneckenwendel (13) erfaßt und infolge des konischen Verlaufs der äußeren Mantelfläche des Behälters (11) aus der Trennflüssigkeit herausgehoben und zur Austragsöffnung (14) gefördert.

Alternativ zum Eintrag als Suspension kann auch der Feststoff mittels einer Fördereinrichtung (z. B. Förderschnecke) in den Behälterinnenraum eingebracht werden, so daß er erst dort und unmittelbar vor der Trennung mit der Trennflüssigkeit vermischt wird.

In diesem Fall wird die mit dem Feststoff ausgetragene Trennflüssigkeit durch eine gesonderte Zufuhr an Trennflüssigkeit ergänzt.

Vorteilhaft erfolgt bei dieser Ausführungsform der Trennvorrichtung der Suspensionseintrag bzw. der Feststoffeintrag auf eine bereits bestehende Schwimmgutschicht (17), wodurch diese nochmals verwirbelt und von anhaftendem Sinkgut oder Luftbläschen befreit wird. Es ist aber auch möglich, das Aufgaberohr so zu verlängern, daß es bis in die Trennflüssigkeitsschicht (18) reicht, falls Eigenschaften der Suspension oder der Feststoffe dies erfordern.

In einer weiteren Ausführungsform ist es auch möglich, die beiden gegenläufigen Schneckenkörper separat anzutreiben, um so unterschiedliche Drehzahlen zu ermöglichen.

In weiterer Ausgestaltung der Erfindung ist es auch möglich, die voneinander getrennten Feststoffe unmittelbar vor ihrem Austrag einer Waschung zu unterziehen.

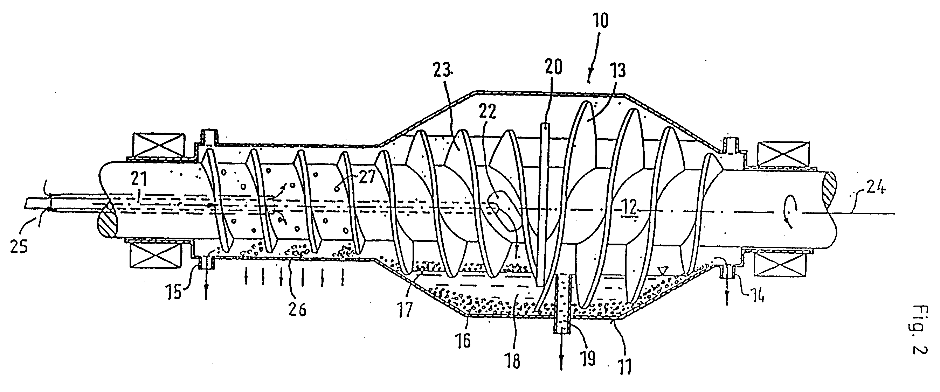

Zu diesem Zweck ist, wie die Fig. 2 zeigt, der Behälter (11) der Trennvorrichtung (10) gegenüber der Trennvorrichtung gemäß Fig. 1 an der Austragsseite für das Schwimmgut um ein zylindrisches Teilstück verlängert und die Mantelfläche dieses Teilstücks als Sieb (26) ausgebildet.

Die Zuführung der Waschflüssigkeit erfolgt über ein Rohr (25), das das axial angeordnete Aufgaberohr (21) umhüllt, und durch Öffnungen (27) im Schneckenmantel.

In der in der Fig. 2 gezeigten Ausführungsform wird nur das Schwimmgut (17) durch die Schneckenwendel (23) über die als Sieb (26) ausgebildete Mantelfläche des Behälters (11) geführt und dabei mit Waschflüssigkeit versetzte während das Sinkgut (16) unbehandelt aus der Trennvorrichtung (10) ausgetragen wird.

Es ist aber gemäß der Erfindung auch möglich, die Austragsseite für das Sinkgut in ähnlicher Weise wie im gezeigten Beispiel der Fig. 2 zu gestalten, so daß auch das Sinkgut gewaschen werden kann, insbesondere dann, wenn weitere nachgeschaltete Trennstufen mit anderen Trennflüssigkeiten dies erfordern.

Bei den gezeigten Ausführungsbeispielen werden das Schwimmgut und das Sinkgut an entgegengesetzten Enden des Behälters (11) ausgetragen. Es ist aber auch möglich, durch entsprechende Umgestaltung der Trennvorrichtung, insbesondere des Transportschneckenkörpers, den Austrag der Feststoffe durch unterschiedliche Öffnungen an nur einem Ende des Behälter durchzuführen. Bei entsprechenden Eigenschaften der zu trennenden Stoffe sowie der daraus resultierenden Eigenschaft der Suspension ist auch eine Trennvorrichtung gemäß der Erfindung möglich, bei der nur noch der Schneckenkörper oder andere innere Bauteile rotieren und der äußere Behälter in Ruhe verbleibt.

Im gezeigten Ausführungsbeispiel wird die Flüssigkeit über eine oder mehrere Düsen abgeführt. Diese lassen sich stationär oder einstellbar gestalten. Es ist aber auch möglich, die Flüssigkeit über stationäre oder verstellbare Schälscheiben bzw. Schälrohre nach außen abzuführen.

## Patentansprüche

1. Vorrichtung zur naßmechanischen Trennung von Feststoffen, insbesondere von Kunststoffen, nach ihrer Dichte in einer Trennvorrichtung im Zentrifugalfeld, mit einem rotierenden Behälter (11), der mit Öffnungen für den Eintrag der zu trennenden Feststoffe und für den Austrag der getrennten Feststoffe (14 und 15) und der Trennflüssigkeit (19) versehen ist, und mit einer im Behälter angeordneten rotierenden Austragsvorrichtung (12), vorzugsweise einer rotierenden Transportschnecke, dadurch gekennzeichnet, daß
a) in axialer Richtung zwischen der Eintragsöffnung (22) für die zu trennenden Feststoffe und der Austragsöffnung (14) für das Sinkgut (16) eine Stauscheibe (20) angeordnet ist;
b) in axialer Richtung zwischen der Stauscheibe (20) und der Austragsöffnung (14) für das Sinkgut (16) eine Austragsöffnung (19) für die Trennflüssigkeit (18) angeordnet ist;
c) der radiale Abstand der Außenkante der Stauscheibe (20) von der Rotationsbehälterachse (24) größer ist als der radiale Abstand der Oberkante der Austragsöffnung (19) von der Rotationsbehalterachse (24);
d) die Austragsvorrichtung (12) durch die Stauscheibe (20) so geteilt ist, daß der eine Teil der Austragsvorrichtung mit ihrer Wendel das Sinkgut (16) zur Austragsöffnung (14) und der andere Teil der Austragsvorrichtung (12) das Schwimmgut (17) zur Austragsöffnung (15) fördert.

2. Vorrichtung nach Anspruch 1, dadurch gekennzeichnet, daß die beiden durch die Stauscheibe (20) voneinander getrennten Teile der Austragsvorrichtung (12) mit voneinander unterschiedlicher Rotationsdrehzahl angetrieben sind.

3. Vorrichtung nach den Ansprüchen 1 oder 2, dadurch gekennzeichnet, daß in Transportrichtung der Feststoffe vor der Austragsöffnung (15) für das Schwimmgut und/oder vor der Austragsöffnung (14) für das Sinkgut die Mantelfläche des Behälters (11) als Sieb (26) ausgebildet ist und daß in diesem Bereich im Schneckenmantel der Austragsvorrichtung (12) Öffnungen (27) für das Einbringen einer Waschflüssigkeit angeordnet sind.

4. Verfahren zur naßmechanischen Trennung von Feststoffen, insbesondere von Kunststoffen, nach ihrer Dichte in einer Trennvorrichtung nach einem der vorhergehenden Ansprüche, dadurch gekennzeichnet, daß die Rotationsgeschwindigkeit des rotierenden Behälters (11) so groß ist, daß im Bereich des größten radialen Abstandes der äußeren Mantelfläche des Behälters (11) von der Rotationsbehälterachse (24) eine Zentrifugalbeschleunigung von mindestens 300 x g vorzugsweise von mindestens 800 x g vorhanden ist.

5. Verfahren nach Anspruch 4, dadurch gekennzeichnet, daß es verwendet wird zur Trennung von Kunststoffen aus Altkunststoffgemischen, die aus Hausmüll, Gewerbemüll, Elektronikschrott, Pkw-Schrott in grobstückiger Form und/oder in Form von Folien und/ oder Granulaten gewonnen werden und beispielsweise Kunststoffe aus Polyvenylchlorid, Polyäthylen, Polypropylen, Polystyrol enthalten, wobei einzelne Kunststoffe oder Gruppen von Kunststoffen je nach ihrer Dichte mit Hilfe einer geeigneten Trennflüssigkeit, deren Dichte zwischen den Dichten der zu trennender Kunststoffe liegt, als Schwimmgut oder als Sinkgut aus der Trennvorrichtung ausgetragen werden.

6. Verfahren zur Trennung von Feststoffen nach ihrer Dichte insbesondere nach den Ansprüchen 4 oder 5, dadurch gekennzeichnet, daß einer der Kunststoffe durch eine Wärmebehandlung in eine Schmelze überführt wird und diese Schmelze dann als Trennflüssigkeit verwendet wird.

## Claims

1. An apparatus for the wet-mechanical separation of solids, especially of plastics material, according to their density in a separation apparatus in the centrifugal field, with a rotating container (11), which is provided with openings for the charging of the solids which are to be separated and for the discharging of the separated solids (14 and 15) and the separation fluid (19), and with a rotating discharge apparatus (12) arranged in the container, preferably a rotating worm conveyor, characterised in that
a) in axial direction between the charging opening (22) for the solids which are to be separated and the discharge opening (14) for the sinking material (16) a baffle plate (20) is arranged;
b) in axial direction between the baffle plate (20) and the discharge opening (14) for the sinking material (16) a discharge opening (19) for the separation fluid (18) is arranged;
c) the radial distance of the outer edge of the baffle plate (20) from the axis (24) of the rotary container is greater than the radial distance of the upper edge of the discharge opening (19) from the axis (24) of the rotary container;
d) the discharge apparatus (12) is divided by the baffle plate (20) so that one part of the discharge apparatus conveys with its spiral the sinking material (16) to the discharge opening (14) and the other part of the discharge apparatus (12) conveys the floating material (17) to the discharge opening (15).

2. An apparatus according to Claim 1, characterised in that the two parts of the discharge apparatus (12) which are separated from each other by the baffle plate (20) are driven at different rotational speeds from each other.

3. An apparatus according to Claim 1 or Claim 2, characterised in that in the conveying direction of the solids in front of the discharge opening (15) for the floating material and/or in front of the discharge opening (14) for the sinking material, the surface of the container (11) is constructed as a screen (26) and that in this region in the worm covering surface of the discharge apparatus (12) openings (27) are arranged for the introduction of a washing fluid.

4. A method for the wet-mechanical separation of solids, especially of plastics material, according to their density in a separation apparatus according to one of the preceding claims, characterised in that the rotational speed of the rotating container (11) is so great that a centrifugal acceleration of at least 300 x g is present, preferably of at least 800 x g, in the region of the greatest radial distance of the outer covering surface of the container (11) from the axis (24) of the rotary container.

5. A method according to Claim 4, characterised in that it is used for the separation of plastics material from mixtures of old plastics material which are obtained from household refuse, trade refuse, electronics waste, passenger vehicle scrap in coarse form and/or in the form of foils and/or granulates and for example contain plastics material of polyvinylchloride, polyethene, polypropene, polystyrene, in which individual plastics material or groups of plastics material are discharged from the separation apparatus as floating material or as sinking material depending on their density, by means of a suitable separation fluid, the density of which lies between the densities of the plastics material which are to be separated.

6. A method for the separation of solids according to their density, especially according to Claim 4 or Claim 5, characterised in that one of the plastics material is converted into a melt by a heat treatment, and this melt is then used as a separation fluid.

## Revendications

1. Appareil pour la séparation mécanique humide de matières solides, notamment de matières synthétiques, selon leur densité, dans le champ centrifuge d'un appareil de séparation avec un récipient (11) en rotation, qui est muni d'ouvertures pour le chargement des matières solides à séparer et pour l'évacuation des matières solides séparées (14 et 15) et du liquide de séparation (19), et avec un dispositif d'évacuation (12) rotatif disposé dans le récipient, de préférence une vis de transport rotative,
appareil caractérisé en ce que :
a) en direction axiale entre l'ouverture de chargement (22) pour les matières solides à séparer et l'ouverture d'évacuation (14) pour le matériau lourd (16) est disposé un disque de retenue (20),
b) en direction axiale entre le disque de retenue (20) et l'ouverture d'évacuation (14) pour le matériau lourd (16) est disposée une ouverture d'évacuation (19) pour le liquide de séparation (18),
c) la distance radiale du bord externe du disque de retenue (20) mesurée à partir de l'axe de rotation (24) du récipient est supérieure à la distance radiale du bord supérieur de l'ouverture d'évacuation (19) mesurée à partir de l'axe de rotation (24) du récipient,
d) le dispositif d'évacuation (12) est partagé par le disque de retenue (20) de façon qu'une partie de ce dispositif d'évacuation transporte avec sa vis le matériau lourd (16) vers l'ouverture d'évacuation (14), tandis que l'autre partie du dispositif d'évacuation (12) transporte le matériau flottant (17) vers l'ouverture d'évacuation (15).

2. Appareil selon la revendication 1, caractérisé en ce que les deux parties du dispositif d'évacuation (12), séparées l'une de l'autre par le disque de retenue (20), sont entraînées à des vitesses de rotation différentes l'une de l'autre.

3. Appareil selon les revendications 1 ou 2, caractérisé en ce que dans la direction de transport des matières solides, avant l'ouverture d'évacuation (15) pour le matériau flottant et/ou avant l'ouverture d'évacuation (14) pour le matériau lourd, la surface-enveloppe du récipient (11) est réalisée sous forme de tamis (26), et en ce que dans cette zone, dans l'enveloppe des vis du dispositif d'évacuation (12), des ouvertures (27) sont ménagées pour l'introduction d'un liquide de lavage.

4. Procédé pour la séparation mécanique humide de matières solides, notamment de matières synthétiques, selon leur densité dans un appareil de séparation selon une des précédentes revendications, procédé caractérisé en ce que la vitesse de rotation du récipient rotatif (11) est suffisamment grande pour que, dans la zone de la plus grande distance radiale entre la surface-enveloppe externe du récipient (11) et l'axe de rotation (24) du récipient rotatif (11), il y ait une accélération centrifuge d'au moins 300 x g, de préférence 800 x g.

5. Procédé selon la revendication 4, caractérisé en ce qu'il est utilisé pour la séparation de matières synthétiques à partir de mélanges de vieilles matières synthétiques, qui sont obtenues à partir d'ordures ménagères, de déchets industriels, de déchets électroniques, de déchets d'automobiles sous forme de gros morceaux et/ou sous forme de films et/ou de granulés, contenant par exemple des matières synthétiques en chlorure de polyvinyle, polyéthylène, polypropylène, polystyrol, tandis que différentes matières synthétiques ou groupes de matières synthétiques sont évacués de l'appareil de séparation selon leur densité, comme matériau flottant ou comme matériau lourd, à l'aide d'un liquide de séparation approprié, dont la densité se situe entre les densités des matières synthétiques à séparer.

6. Procédé pour la séparation de matières solides selon leur densité, notamment selon les revendications 4 ou 5, caractérisé en ce que l'une des matières synthétiques est transformée par un traitement thermique en une masse fondue, et cette masse fondue est ensuite utilisée comme liquide de séparation.
